(19) Europäisches Patentamt
European Patent Office
Office européen des brevets

(11) **EP 2 804 825 B1**

(12) **FASCICULE DE BREVET EUROPEEN**

(45) Date de publication et mention de la délivrance du brevet:
**14.06.2017 Bulletin 2017/24**

(21) Numéro de dépôt: **13704167.9**

(22) Date de dépôt: **16.01.2013**

(51) Int Cl.:
**B65G 47/08** *(2006.01)*   **B65G 47/29** *(2006.01)*
**B65G 47/28** *(2006.01)*

(86) Numéro de dépôt international:
**PCT/FR2013/050102**

(87) Numéro de publication internationale:
**WO 2013/107985 (25.07.2013 Gazette 2013/30)**

(54) **DISPOSITIF ET PROCEDE DE FORMATION DE LOTS A PARTIR D'OBJETS ALIGNES ET ACCOLES**

VORRICHTUNG UND VERFAHREN ZUR HERSTELLUNG VON GRUPPEN AUS AUSGERICHTETEN UND BENACHBARTEN OBJEKTEN

DEVICE AND METHOD FOR FORMING BATCHES FROM ALIGNED AND ADJACENT OBJECTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.01.2012   FR 1250478**

(43) Date de publication de la demande:
**26.11.2014   Bulletin 2014/48**

(73) Titulaire: **C.E.R.M.E.X. CONSTRUCTIONS ETUDES ET RECHERCHES DE MATERIELS POUR L'EMBALLAGE D'EXPEDITION**
**21910 Corcelles-les-Cîteaux (FR)**

(72) Inventeur: **RABEC, Dominique**
**76930 Octeville-sur-Mer (FR)**

(74) Mandataire: **Eltzer, Thomas**
**Gebo Packaging Solutions France**
**IP Central**
**5-7 rue du Commerce**
**ZI - CS 73445 REICHSTETT**
**67455 Mundolsheim Cedex (FR)**

(56) Documents cités:
**EP-A1- 0 685 392        EP-A1- 1 918 226**
**WO-A2-2009/019382    DE-A1- 19 528 356**
**NL-A- 7 404 922        US-A- 4 551 964**

**Description**

**DOMAINE DE L'INVENTION :**

L'invention concerne le domaine des dispositifs et des procédés de formation de lots à partir d'objets alignés et accolés les uns à la suite des autres.

L'invention concerne en particulier la formation de lots d'objets parallélépipédiques, notamment des objets tels que des briques souples contenant un liquide, par exemple un liquide alimentaire.

**ETAT DE LA TECHNIQUE :**

La demande WO 2009/019382 décrit un procédé et un dispositif de formation de lots d'objets sensiblement parallélépipédiques circulant sur une bande de convoyage. Le procédé comprend une étape d'immobilisation de la file indienne d'objets jusqu'à un objet qui sera en tête du lot à former. Le dispositif laisse filer les objets en aval pour créer un espace s'étendant axialement devant l'objet de tête de lot. Cela permet alors d'introduire un taquet dans cet espace axial. Le déplacement du taquet à une vitesse inférieure à la bande de convoyage permet de séparer les lots les uns des autres.

Le moyen d'immobilisation décrit utilise des volets pivotants, pinçant latéralement la file d'objets à immobiliser. Un tel moyen d'immobilisation est dépendant de la résistance mécanique des objets à mettre en lots.

Pour des objets tels que des briques parallélépipédiques à parois souples, connus par exemple sous la marque "Tétrapack®", le pincement peut ne pas suffire à immobiliser la file de briques. Cela est particulièrement le cas pour des briques alimentaires de contenance supérieure à un demi-litre. On recherche alors un procédé de mise en lots moins sensible aux dimensions géométriques des objets et à leur résistance mécanique.

Pour des briques alimentaires fournies avec une paille collée contre le côté de la brique, il est souhaitable d'avoir un procédé de mise en lots qui ne risque pas de décoller la paille.

Pour des objets fragiles ou instables, il est souhaitable de mettre les objets en lots sans provoquer de chocs.

Pour les objets lourds, on souhaite un procédé de mise en lots qui consomment moins d'énergie qu'un procédé immobilisant périodiquement la file d'objets.

L'entraînement des objets après les avoir immobilisés peut entraîner des accélérations élevées et des glissements non souhaités. On cherche à éviter que les lots formés ne se dispersent sur le convoyeur. On cherche également à augmenter la cadence de mise en lots.

Le document EP1918226 décrit un dispositif pour grouper ou séparer des articles parallélépipédiques guidés par deux guides latéraux le long d'une bande de convoyage d'un convoyeur selon le préambule de la revendication 1. Un élément en forme de coin arrive par dessous la bande de convoyage. La forme en coin pousse un des objets et retient le suivant. Ce dispositif est décrit pour des articles de type cartons ou caisses d'emballage vides. Il s'agit d'objets à la fois légers et de grandes dimensions en regard de leur poids. Ce document ne fait pas partie du domaine de l'invention car il ne convient pas pour des objets de type briques souples contenant un liquide. En effet les briques souples contenant du liquide sont à la fois lourdes, déformables et présentent une base d'appui étroite en regard de leur hauteur. La forme en coin de l'élément de retenue décrit dans le document précité risque de percer la base des objets qu'il rencontre lors de sa remontée au dessus de la bande de convoyage, si ces objets sont des briques alimentaires et non pas des cartons d'emballage. Le fait que l'élément de retenue décrit ne retienne l'objet que par le bas risque de faire tomber cet objet en avant si cet objet est une brique à base étroite. L'espace nécessaire au passage de l'élément de retenue décrit entre la bande de convoyage et les guides latéraux entrainerait le pivotement des briques alimentaires et leur blocage entre les guides latéraux.

Les documents FR2225363 et DE19528356 décrivent également des dispositifs pour séparer des caisses. Le dispositif décrit dans le document FR2225363 comprend des taquets prévus pour faire saillie au-dessus d'un convoyeur. La caisse rencontrée par le taquet se soulève et le taquet glisse dessous jusqu'à retenir la caisse suivante. Là encore, ce document ne fait pas partie du domaine de l'invention car le taquet décrit ne conviendrait pas pour soulever des briques alimentaires qui basculeraient.

Les documents US4551964 et EP0685392 décrivent tous les deux des taquets agencés pour retenir des objets. Ces taquets sont articulés et entrainés le long d'une boucle. Le mouvement de rotation de ces taquets autour de leur axe d'articulation est dû à un système de guidage constitué d'un galet glissant le long d'une came. Cela requière une installation complexe et encombrante.

**OBJET ET RESUME DE L'INVENTION :**

L'invention propose un dispositif selon la revendication 1 et un procédé selon la revendication 11 de formation de lots à partir d'objets alignés et accolés qui remédient à au moins l'un des besoins ou inconvénients précités.

Un but de l'invention est de proposer un dispositif et un procédé, compatibles avec des objets parallélépipédiques, moins sensibles aux variations dimensionnelles des objets à mettre en lots et/ou compatibles avec des cadences de mise en lots plus élevées.

Selon l'invention, le dispositif de formation de lots à partir d'objets de type briques alimentaires, lesquels objets circulant alignés en une file et sensiblement accolés les uns aux autres, comprend :

- un convoyeur, conçu pour entraîner les objets par friction selon un axe de convoyage,

- un mécanisme de freinage conçu pour ralentir par rapport au convoyeur au moins un objet, dit objet de début de lot, ledit mécanisme étant conçu pour libérer les objets antérieurs audit objet de début de lot afin que ceux-ci continuent leur déplacement entraînés par le convoyeur.

Le mécanisme de freinage est équipé d'un moyen de décalage transversal conçu pour déplacer, latéralement par rapport à l'axe de convoyage, un objet immédiatement antérieur à l'objet de début de lot.

On entend par « briques alimentaires » des emballages primaires, composés de carton et d'aluminium alimentaire, c'est-à-dire directement en contact avec l'aliment qu'ils contiennent. Les briques alimentaires ont généralement une base rectangulaire et une forme tubulaire s'élevant de leur base. La paroi des briques alimentaires est souple. La dimension de la base des briques alimentaires est généralement plus réduite que leur hauteur. Lors de leur transport par des convoyeurs, la stabilité et l'intégrité de la forme de la brique alimentaire est un point critique.

On comprend que grâce au moyen de décalage transversal d'un des objets par rapport à l'objet immédiatement suivant, il est possible de faire apparaître un épaulement constitué par au moins une portion de la surface frontale de l'objet suivant. Cet épaulement permet une prise en charge de l'objet de début de lot suivant de manière franche et indépendante de la dimension et de la résistance mécanique de cet objet. Un tel dispositif est particulièrement utile pour les objets parallélépipédiques.

De plus, la prise en charge de l'objet de début de lot suivant peut se faire sans immobilisation des objets. Ainsi un tel dispositif est compatible avec des cadences élevées de formation de lots.

Selon l'invention, le mécanisme de freinage est équipé d'une pluralité de taquets, et d'un moyen de déplacement successif de chacun des taquets depuis une première zone axiale jusqu'à une deuxième zone axiale du convoyeur avec une vitesse de ralenti inférieure à une vitesse d'entraînement des objets par le convoyeur. Le mécanisme de freinage est conçu pour que les taquets passent dans une position transversale de retenue lorsqu'ils arrivent dans la première zone axiale et pour qu'ils se retirent dans une position transversale escamotée lorsqu'ils atteignent la deuxième zone axiale. La direction transversale est considérée relativement à l'axe de convoyage. Selon l'invention, le mécanisme de freinage est conçu pour déplacer chacun des taquets parallèlement au plan de convoyage, entre une position transversale de retenue lorsqu'un taquet donné arrive dans la première zone axiale, et une position transversale escamotée lorsque ledit taquet atteint la deuxième zone axiale. Autrement dit, lors de son déplacement parallèle au plan de convoyage, chaque taquet pousse ledit « objet immédiatement antérieur à l'objet de début de lot » et arrive dans la position transversale de retenue où il peut servir d'appui axial pour retenir axialement ledit « objet de début de lot ». Ledit taquet est également appelé taquet d'appui axial.

Le fait que le taquet soit amené en position transversale de retenue par un mouvement exclusivement parallèle au plan de convoyage permet que ce taquet puisse s'étendre sur une portion importante de la hauteur de l'objet à retenir axialement, hauteur considérée perpendiculairement au plan de convoyage. Dans le cas d'objets de type briques souples, telles que des briques contenant un aliment liquide, cela permet de répartir la pression d'appui et de moins déformer l'objet à retenir axialement.

De préférence, le taquet peut s'étendre à la fois à l'extrémité haute et à l'extrémité basse de l'objet à retenir axialement. Le taquet contribue ainsi à la stabilité des objets sur le convoyeur pendant qu'ils sont ralentis. Cela est particulièrement important pour des objets dont la base en contact avec le convoyeur présente une largeur plus réduite que la hauteur de l'objet.

Avantageusement, chacun des taquets est monté mobile selon une direction transversale à l'axe de convoyage, entre la position transversale de retenue dans laquelle le taquet interfère avec la file d'objets afin que l'objet de début de lot puisse prendre appui axialement sur le taquet et continuer son déplacement à la vitesse de ralenti et la position transversale escamotée dans laquelle le taquet laisse libre l'objet de début de lot correspondant de continuer son déplacement à la vitesse d'entraînement.

Ce mode de réalisation présente l'avantage que le freinage peut avoir lieu à une vitesse de ralenti faiblement réduite par rapport à la vitesse d'entraînement du convoyeur. L'espace axial de séparation entre deux lots successifs est égal à la longueur du lot à former multiplié par le ralentissement relatif imposé. Cela permet de réduire les à-coups et la consommation d'énergie au strict nécessaire à la création de l'espace axial de séparation entre deux lots successifs.

Selon un mode de réalisation, le dispositif comprend un guide latéral principal situé du même côté de la file d'objets que le mécanisme de freinage. Le taquet fait saillie du guide latéral principal vers une zone de défilement de la file d'objets lorsque ledit taquet est en position transversale de retenue. Le taquet est en-deçà du guide latéral principal lorsque le taquet est dans la position transversale escamotée.

Lorsque le taquet arrive en saillie par rapport au guide latéral principal, il rencontre un premier objet défilant immédiatement devant un deuxième objet. Autrement dit, le taquet interfère avec la file d'objets en aval du deuxième objet. Cela permet à ce taquet, à la fois de pousser et décaler transversalement le premier objet, et de retenir axialement le deuxième objet. Le premier objet est appelé "objet de fin du lot précédant" et le deuxième objet est appelé "objet de début du lot suivant".

Selon un mode de réalisation, le dispositif comprend un guide latéral auxiliaire situé sur un côté de la file d'objets, opposé au guide latéral principal, à une distance du guide latéral principal adaptée pour guider la file d'objets en appui les uns sur les autres. Ledit guide latéral auxiliaire s'étend au moins en amont de la première zone axiale. Le guide latéral auxiliaire permet de maintenir l'objet de début de lot suivant dans l'alignement des autres objets, et ceci malgré le mouvement de décalage latéral de l'objet de fin de lot précédent et malgré l'effort de pression axiale existant entre ces deux objets successifs du fait d'un ralentissement antérieur du lot précédent.

Le guide principal et le guide auxiliaire en regard servent à contenir latéralement une zone d'accumulation des objets entraînés par le convoyeur. La zone d'accumulation s'étend en amont de la première zone axiale. Cette zone d'accumulation peut servir de stock tampon.

Toutefois, pour réduire la consommation d'énergie due au frottement sur le convoyeur des objets en amont de la première zone axiale, on peut faire précéder le convoyeur précité par un autre convoyeur entraînant les objets à une vitesse intermédiaire entre les deux vitesses précitées.

Avantageusement, le dispositif comprend un espace de dégagement s'étendant au moins dans la première zone axiale de manière à recevoir et à ne pas stopper ledit objet antérieur à l'objet de début de lot.

Avantageusement, le mécanisme de freinage est conçu pour que, lorsqu'un taquet arrive axialement dans la première zone axiale, le taquet immédiatement en aval arrive dans la deuxième zone axiale. Ce mode de réalisation convient pour un nombre d'objets dans les lots à former inférieur à 20, et de préférence inférieur à 10.

Avantageusement, le mécanisme de freinage est conçu de manière que le retrait du taquet situé en deuxième zone axiale vers la position transversale escamotée coïncide sensiblement, et de préférence suit, le passage du taquet situé en première zone axiale vers la position transversale de retenue. Ainsi, dès que le taquet de la première zone axiale est prêt à ralentir le lot suivant, le lot antérieur est libéré par le taquet de la deuxième zone axiale. L'ensemble de la course entre les deux zones axiales sert à générer l'espace axial entre deux lots successifs. On réduit ainsi au maximum les périodes de frottement inutiles des objets sur le convoyeur.

Selon un mode de réalisation, le mécanisme de freinage est conçu de manière que, pour chaque taquet, le mouvement de passage en position transversale de retenue se superpose avec un ralentissement axial supplémentaire, à une vitesse inférieure à la vitesse de ralenti entre les deux zones axiales. Ce mode de réalisation permet au taquet de première zone axiale d'arriver en position transversale de retenue sans buter sur une éventuelle arête vive d'un objet de début de lot parallélépipédique, sans pour autant décaler l'instant où la taquet commence à retenir axialement l'objet de début de lot.

En effet, le taquet commence à provoquer le décalage transversal de l'objet de fin de lot précédent alors que ledit taquet est en aval de l'objet de début de lot suivant, c'est-à-dire devant cet objet. Durant la course de décalage transversal, le taquet se rapproche relativement de la surface frontale de l'objet de début de lot suivant. Ainsi, lorsque le taquet de la deuxième zone axiale libère le lot précédent, le taquet de la première zone axiale est prêt à prendre en charge le ralentissement du lot suivant, sans temps mort, et ce malgré la continuité de contact entre les objets parallélépipédiques successifs.

Selon un mode de réalisation, le mouvement transversal vers la position transversale escamotée se superpose avec une accélération axiale pour atteindre une vitesse axiale supérieure à la vitesse d'entraînement par le convoyeur. Le fait que la survitesse soit non seulement supérieure à la vitesse de ralenti, mais également supérieure à la vitesse d'entrainement par le convoyeur, permet à l'objet qu'il retenait jusqu'alors d'être immédiatement entrainé par le convoyeur à la vitesse d'entrainement du convoyeur. En plus, le taquet s'échappe en avant de l'objet qui a accéléré. Cela permet au taquet de deuxième zone axiale de se retirer en contournant l'éventuelle arête vive d'un objet de début de lot qui va être libéré.

Selon un mode de réalisation, le mécanisme de freinage comprend un lien en boucle fermée, entraîné par au moins deux roues, l'une étant en regard de la première zone axiale et l'autre étant en regard de la deuxième zone axiale. Le mécanisme de freinage comprend en outre au moins trois taquets. Chacun des taquets est monté à rotation sur un segment principal du lien, autour d'un axe de rotation du taquet et comprend un bras de levier et une bielle. La bielle est montée à rotation sur un segment auxiliaire de lien situé en aval du segment principal et est articulée avec le bras de levier en un point d'articulation situé à distance de l'axe de rotation du taquet.

Le taquet présente une extrémité utile interférant avec les objets. Avantageusement, le point d'articulation entre la bielle et le levier est situé du côté intérieur de la boucle fermée formée par le lien et l'extrémité utile du taquet est située du coté extérieure de ladite boucle.

Le fait que l'une des roues d'entrainement du lien soit en regard de la première zone axiale fait que la portion de lien s'étendant entre un segment principal et un segment auxiliaire correspondant à un taquet donné, passe d'une forme courbe à une forme droite lorsque ledit taquet arrive dans le première zone axiale. Autrement dit, cette portion de lien se redresse dans la première zone axiale. La distance entre l'axe d'articulation du taquet et l'axe d'articulation de la bielle avec le segment auxiliaire, s'allonge lorsque le taquet arrive dans la première zone axiale. La position particulière précitée de l'extrémité utile du taquet et de l'axe d'articulation entre bielle et bras de levier fait que le segment auxiliaire tire à lui l'axe d'articulation dernier cité et renvoi en sens inverse l'extrémité utile du taquet. Cela imprime à l'extrémité utile du taquet un ralentissement supplémentaire.

De manière similaire, le fait que la portion de lien précitée s'enroule autour de la roue située en regard de la deuxième zone axiale, fait qu'à cet endroit, la bielle repousse le bras de levier vers l'amont et entraine l'extrémité utile du taquet vers l'aval. Cela imprime une survitesse à l'extrémité utile du taquet.

On comprend que, si l'axe d'articulation entre le bras de levier et la bielle est situé entre l'extrémité utile du taquet et l'axe d'articulation du taquet avec le lien, on obtiendrait le même ralentissement supplémentaire en première zone axiale et la même survitesse en deuxième zone axiale en ayant un segment auxiliaire disposée en amont du segment principal. Autrement dit, les axes d'articulation et la position relative du segment auxiliaire par rapport au segment principal sont déterminés pour imprimer au taquet un ralentissement supplémentaire en première zone axiale et une survitesse en deuxième zone axiale par rapport à la vitesse de défilement du lien qui est la vitesse de ralenti.

Avantageusement, la vitesse de ralenti est comprise entre 50% et 99% de la vitesse d'entraînement par le convoyeur, de préférence entre 60% et 90%, et notamment entre 65% et 75%.

Selon un autre aspect, l'invention porte également sur un procédé de formation de lots à partir d'objets circulant alignés en une file et sensiblement accolés les uns aux autres. Le procédé comprend :

- une étape d'entraînement des objets par friction selon un axe de convoyage d'un convoyeur,
- une étape de décalage transversal au cours de laquelle un des objets entrainés est déplacé transversalement par rapport à l'axe de convoyage, ledit objet constituant ainsi un objet de fin de lot précédent,
- une étape de freinage d'un objet immédiatement postérieur à l'objet déplacé transversalement, constituant ainsi un objet de début du lot suivant, et
- une étape de libération des objets antérieurs à l'objet de début de lot afin que ceux-ci continuent leur déplacement entrainés par le convoyeur.

Avantageusement, l'étape de déplacement transversal de l'objet de fin de lot précédant a lieu dans une première zone axiale du convoyeur, et l'étape de freinage dudit objet de début du lot suivant se fait en déplaçant ledit objet de début de lot suivant à une vitesse de ralenti inférieure à la vitesse d'entraînement par le convoyeur, à partir de la première zone axiale jusqu'à une deuxième zone axiale du convoyeur.

Avantageusement, l'étape d'introduction du taquet d'appui axial s'accompagne d'un ralentissement axial supplémentaire du taquet d'appui axial, à une vitesse inférieure à la vitesse de ralenti entre les deux zones axiales, et la phase de retrait du taquet d'appui axial vers la position transversale escamotée se superpose avec une accélération axiale du taquet d'appui axial pour atteindre une vitesse axiale supérieure à la vitesse d'entraînement par le convoyeur.

Avantageusement, le procédé utilise plusieurs taquets de freinage axial. Chacun des taquets de freinage axial est exclusivement déplacé parallèlement au plan de convoyage des objets.

Selon un mode de réalisation, le procédé comprend une étape d'introduction d'un taquet d'appui axial dans la première zone axiale, et en aval de l'objet de début du lot suivant.

Avantageusement, l'étape de libération des objets se fait par retrait du taquet d'appui axial pour laisser tous les objets situés entre la première et la deuxième zone axiale continuer leur déplacement à la vitesse d'entraînement par le convoyeur.

Avantageusement, le déplacement transversal de l'objet de fin de lot précédent est inférieur à la largeur de la file d'objets, et de préférence inférieur à la moitié de ladite largeur. Cela permet à l'objet de début de lot suivant et à l'objet de fin de lot précédent de continuer à être accolés l'un derrière l'autre durant toute ou une partie de la phase de décalage transversal, et ceci jusqu'à ce que le taquet d'appui axial prenne en charge le lot suivant. Cela évite les carambolages et les à-coups dans l'écoulement des objets alignés.

Avantageusement, les objets mis en lots sont des briques à parois souples et sensiblement parallélépipédiques.

**BREVE DESCRIPTION DES DESSINS :**

La présente invention sera mieux comprise à l'étude de la description détaillée de quelques modes de réalisation pris à titre d'exemples nullement limitatifs et illustrés par les dessins annexés sur lesquels :

- la figure 1 est une vue dessus d'un mode de réalisation du dispositif.
- la figure 2 est un détail du mécanisme de freinage de la figure 1, illustrant la phase de retrait du taquet d'appui axial vers la position transversale escamotée.
- la figure 3 est un détail du mécanisme de freinage de la figure 1, illustrant la phase de passage du taquet d'appui axial en position transversale de retenue.
- les figures 4a et 4b sont respectivement, une coupe selon le plan IVa-IVa et une vue selon la flèche F, d'un deuxième mode de réalisation.

**DESCRIPTION DETAILLEE :**

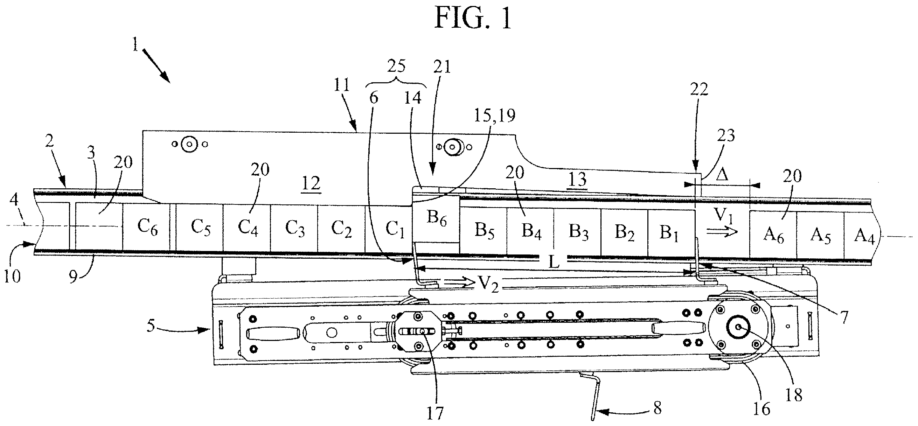

Comme illustré en figure 1, le dispositif **1** de formation de lots comprend un convoyeur **2** équipé d'une bande 3 de convoyage entraînée à une vitesse **V1** le long d'un axe **4** de convoyage et un mécanisme **5** de freinage entraînant des taquets **6, 7, 8** à une vitesse **V2,** plus lente que V1. Le convoyeur 2 comprend un guide **9** latéral principal s'étendant tout le long du convoyeur 2 et guidant latéralement au moins la partie basse d'une série d'objets **20** (A4-A6, B1-B6, C1-C6, etc....) . De tels objets 20 sont par exemple des briques alimentaires. Le convoyeur 2 comprend également un guide **11** latéral auxiliaire disposé d'un côté de la bande 3 de convoyage opposé au guide 9 latéral principal.

Le guide 11 latéral auxiliaire présente une portion **12** arrière sensiblement parallèle à l'axe 4 de convoyage et à une distance du guide 9 latéral principal déterminée de manière que les objets 20 guidés entre ladite portion 12 arrière et le guide 9 latéral principal puissent être poussés les uns contre les autres par la friction de la bande 3 de convoyage, sans être serrés latéralement, et sans risque de carambolage des objets 20.

Le guide 11 latéral auxiliaire présente une portion **13** avant, sensiblement parallèle à l'axe 4 de convoyage, plus éloignée horizontalement du guide 9 latéral principal que ladite portion 12 arrière, par exemple à une distance comprise entre 1,2 et 1,8 fois la largeur des objets 20. La position latérale de la portion 13 avant par rapport à la portion 12 arrière dégage un espace **14** de dégagement latéral, disponible pour recevoir une partie d'un objet 20 qui quitte la portion 12 arrière et arrive en regard de la portion 13 avant.

Les portions 12 arrière et 13 avant peuvent, de manière non obligatoire, former un ensemble monobloc présentant un épaulement 15 entre les portions 12 et 13, l'ensemble étant réglable latéralement pour s'adapter à différents formats des objets 20.

Le mécanisme 5 de freinage comprend une première roue **17** située en regard d'une première zone **21** axiale du convoyeur 2, laquelle première zone 21 axiale est située immédiatement en aval de l'extrémité **19** de la portion 12 arrière et comprend une deuxième roue **18** située en regard d'une deuxième zone **22** axiale du convoyeur 2 située sensiblement en regard d'une extrémité **23** aval de la portion 13 avant. Les taquets 6, 7, 8 sont montés de manière équidistante le long d'un lien **16,** telle qu'une courroie ou une chaîne. La courroie 16 est montée sur la première roue 17 et la deuxième roue 18, de façon que le brin de la courroie 16 le plus proche du convoyeur 2 soit sensiblement parallèle à l'axe 4 de convoyage.

Dans une variante, ce brin peut présenter un angle inférieur à 5° et orienté de manière à s'approcher du convoyeur 2 dans le sens de défilement de la bande 3 de convoyage.

Les première et deuxième roues 17, 18 sont disposées sur le côté du convoyeur 2 correspondant au guide 9 latéral principal et sont situées à une distance de ce guide 9 déterminée de manière que, lorsque le taquet 6 pivote autour de la première roue 17, ce taquet 6 passe au-dessus du guide 9 latéral principal et pénètre dans une zone 10 de défilement des objets 20, au-dessus de la bande 3 de convoyage. Durant ce mouvement, ledit taquet 6 quitte une position latérale escamotée pour rejoindre la position illustrée, dite position transversale de retenue.

Sensiblement au même moment, le taquet 7 est dans la deuxième zone 22 axiale et s'apprête à pivoter autour de la deuxième roue 18, ce qui a comme effet que le taquet 7 se retire de la zone 10 de défilement des objets, c'est-à-dire quitte sa position transversale de retenue telle qu'illustrée, et rejoint une position transversale escamotée.

La distance "L" entre les taquets 6 et 7 est légèrement supérieure à un nombre entier de fois la longueur de chaque objet 20.

On va maintenant décrire le fonctionnement du dispositif 1 de formation des lots. Le fait que la première roue 17 soit en face de l'espace 14 de dégagement latéral fait que, lorsque le taquet 6 pénètre dans la zone 10 de défilement, il peut pousser latéralement l'objet **B6** dans l'espace 14 de dégagement latéral et ainsi être en position de retenue, permettant de retenir les objets en amont du taquet 6, tels que les objets C1-C6, qui sont poussés par la friction de la bande 3 de convoyage contre le taquet 6. Autrement dit, le taquet 6 et l'espace 14 de dégagement latéral constituent ensemble un moyen **25** de décalage transversal de l'objet B6, immédiatement antérieur à l'objet C1 de début du lot suivant.

Avantageusement, la portion 12 arrière maintient latéralement les objets C1-C6 pendant le décalage latéral de l'objet B6. Ce maintien permet de vaincre le frottement entre l'objet C1 et l'objet B6 dû à la pression axiale entre les objets 20 provoquée par l'entraînement du convoyeur 2.

Considérons maintenant le fonctionnement du dispositif 1 de formation de lots pendant que le taquet 6 se déplace à la vitesse V2 pour venir prendre la place qu'occupait précédemment le taquet 7, c'est-à-dire pendant que le taquet 6 passe de la première zone 21 axiale jusqu'à la deuxième zone 22 axiale du convoyeur 2. Durant ce mouvement, les objets C1 à C6 sont retenus par le taquet 6 et prennent progressivement la place qu'avaient les objets B1 à B6 initialement. Dès que le taquet 6 quitte la première zone 21 axiale, le taquet 7 s'escamote et les objets B1 à B6 ne sont plus retenus par le taquet 7 et poursuivent alors leur déplacement à la vitesse V1 imposée par la bande 3 de convoyage. Ils restent ainsi groupés en un lot **B1-B6.** Le taquet 6 parvient alors à la deuxième zone 22 axiale au bout d'un temps T = L/V1. Durant le même temps, l'objet B6 de fin du lot précédent s'est déplacé à la vitesse V2 et a parcouru une distance V2*T, de sorte que l'objet B6 prend alors la place qu'avait initialement l'objet A6 et que l'objet C1 prend la place qu'avait initialement l'objet B1. Ainsi, au bout du temps T, il s'est créé un décalage entre deux lots successifs qui est de $\Delta = L\left(\dfrac{V1}{V2} - 1\right)$ .

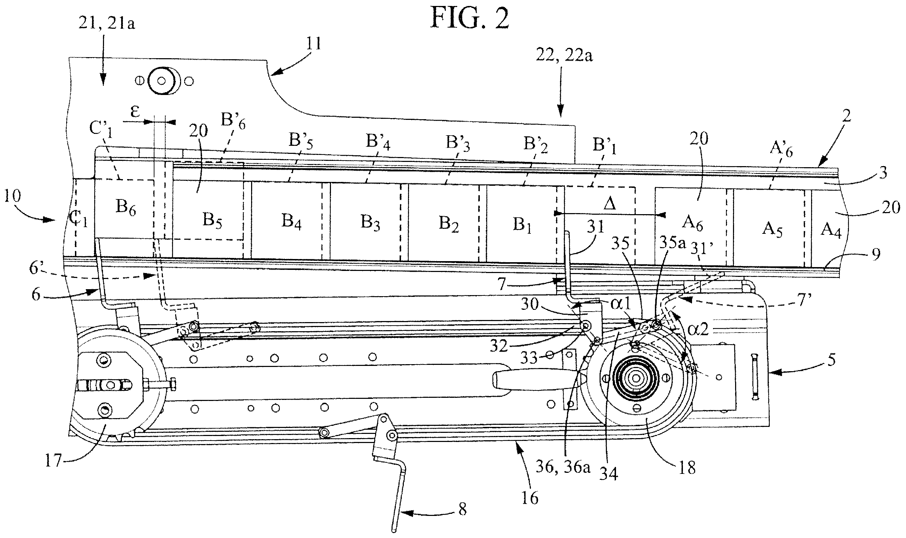

On va à l'aide de la figure 2 décrire un exemple de mécanisme de taquet et plus particulièrement le passage de la position de retenue à la position escamotée du taquet 7. La figure 2 illustre en traits pleins une configuration du dispositif 1 où le taquet 7 est dans la position de retenue et en pointillés une configuration du dispositif après un bref instant "dt". A l'issue de ce bref instant "dt", le taquet 6 arrive en position 6' illustrée en pointillés, le taquet 7 arrive en position 7', les objets C1, B6-B1, A6 passent dans les positions illustrées en pointillés C'1, B'6-B'1, A'6.

Chacun des taquets 6, 7, 8 comprend un bras **30** de levier sur lequel est monté fixe une palette **31** adaptée à chaque type d'objets 20 à retenir. Le bras 30 est monté mobile en rotation sur un segment **32** principal de la courroie 16 autour d'un axe **33** d'articulation du taquet correspondant. Le taquet comprend en outre une bielle **34** présentant une première extrémité montée articulée en rotation sur un segment **35** auxiliaire de la courroie 16 autour d'un axe de rotation **35a,** et une deuxième extrémité montée articulée en rotation autour d'un axe **36a** d'articulation sur un point **36** d'articulation du bras 30 de levier. Ledit point 36 d'articulation est situé à distance de l'axe 33 d'articulation du taquet. Le segment 35 auxiliaire est disposé en aval (dans le sens de défilement du lien 16) du segment 32 principal relatif au même taquet 6, 7 ou 8. Autrement dit, le segment 35 auxiliaire du taquet 7 arrive dans une zone courbe de la courroie 16 qui contourne la deuxième roue 18, avant que le segment 32 principal de ce même taquet 7 n'arrive dans cette même zone courbe. L'axe 33 d'articulation du taquet, l'axe 35a d'articulation sur le segment 35 auxiliaire et l'axe 36a d'articulation sur le bras 30 de levier sont tous parallèles entre eux et perpendiculaires à un plan dans lequel la courroie 16 évolue. Le point 36 d'articulation est situé du côté intérieur de la boucle fermée que constitue la courroie 16.

L'angle centré sur l'axe 36a et s'étendant entre l'axe 33 et l'axe 35a est constant lorsque le segment 32 principal ainsi que le segment 35 auxiliaire sont tous les deux dans une portion rectiligne de la courroie 16 ou bien lorsqu'ils sont tous les deux dans une portion circulaire. Cependant, en passant d'une portion rectiligne à une portion circulaire de la courroie 16, ledit angle se ferme et passe d'une valeur $\alpha$**1** (taquets 6, 6', 7) à une valeur $\alpha$**2** plus faible (taquet 7').

Lorsque le segment 35 auxiliaire relatif au taquet 7 arrive dans la portion courbe de la courroie 16 autour de la deuxième roue 18, la palette 31 du taquet 7 est exactement dans une deuxième position **22a**, au coeur de la deuxième zone 22 axiale du convoyeur 2. Jusqu'à cet instant, et depuis la première zone 21 axiale, le mouvement de la palette 31 du taquet 7 était une translation pure à la vitesse V2 et la palette 31 retenait l'objet B1. A partir de cet instant, le mouvement de la palette 31 est soudain la superposition d'une translation rectiligne à la vitesse V2 et d'une rotation autour de l'axe 33. Ensuite, lorsque le segment 32 principal arrive à son tour dans la portion courbe, le mouvement de la palette 31 devient une rotation pure autour de l'axe de rotation de la deuxième roue 18. Ainsi, l'objet B1 voit une palette 31 fuir devant lui en raison de cette rotation supplémentaire. La palette 31 du taquet 7 quitte la deuxième position 22a en étant soumise à une accélération axiale supplémentaire lui permettant d'atteindre une vitesse supérieure à la vitesse V1 de la bande 3 de convoyage, puis de s'escamoter latéralement.

Autrement dit, à un endroit précis du dispositif 1, endroit appelé deuxième position 22a, la vitesse axiale du taquet 7 augmente pour ne plus retenir l'objet B1 de début de lot. A partir de cet endroit précis, l'objet B1 et tous les objets B6-B2 qui le suivent cessent d'être freinés et sont alors entraînés en bloc par la bande 3 de convoyage. Après le bref instant "dt" qui sépare la configuration en traits pleins de celle en pointillés, l'objet B'6 s'est détaché axialement de l'objet C'1 qui le suit d'une distance $\varepsilon$ = (V1 - V2).dt.

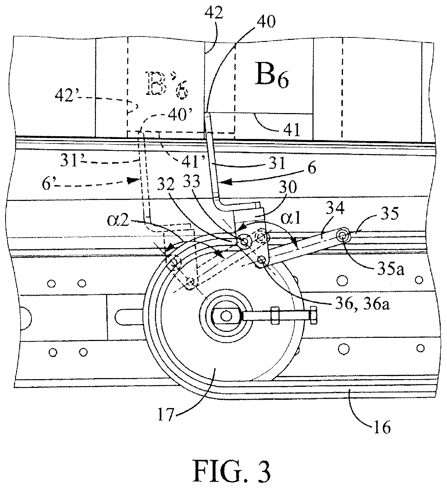

On va à l'aide de la figure 3 décrire le passage de la position escamotée à la position de retenue du taquet 6. La configuration illustrée en pointillés est celle ayant lieu un instant bref "dt" avant l'arrivée du taquet 6 en position de retenue illustrée en traits pleins. Lorsque la palette 31 du taquet 6 finit sa rotation autour de l'axe de rotation de la première roue 17, une extrémité **40'**, **40** de la palette **31'**, **31** pousse un côté **41'**, **41** latéral de l'objet B'6, B6 qui sera le dernier objet du lot précédent B6-B1. L'extrémité 19 aval de la portion 12 arrière du guide 11 latéral auxiliaire est positionnée par rapport à la première roue 17 de manière que l'espace 14 de dégagement latéral puisse recevoir l'objet B'6 dès cet instant.

Toutefois, l'extrémité 40' de la palette 31' commence sa pénétration dans la zone 10 de défilement des objets 20 à distance du côté aval d'un côté **42'** frontal de l'objet **C'1**. A partir de la configuration en pointillés, le segment 35 auxiliaire du taquet 6' quitte la portion courbe de la courroie 16 pour rejoindre la portion rectiligne. L'angle centré sur le point 36 d'articulation et s'étendant entre l'axe 33 d'articulation du bras 30 de levier et l'axe 35a se réouvre et passe de la valeur $\alpha$2 à la valeur $\alpha$1. Durant cette transition, le mouvement de la palette 31 du taquet 6 est la superposition d'une rotation autour de l'axe de la première roue 17 et d'une rotation autour de l'axe 33 en sens inverse. Autrement dit, la palette 31' se met à ralentir par rapport à la vitesse V2 imposée à tous les objets 20 en amont du taquet 7 qui retient encore les objets 20. Ce ralentissement amène la palette 31 en contact avec un côté **42** frontal de l'objet **C1**. A partir de ce moment, le taquet 6 peut retenir tous les objets 20 en amont de lui, et le taquet 7 peut s'escamoter. Le ralentissement supplémentaire, vu le long de l'axe 4 de convoyage, permet au taquet 6 de commencer à pousser l'objet B'6 sans heurter une arête vive des objets 20, et ceci avant de servir de retenue axiale des objets C6-C1.

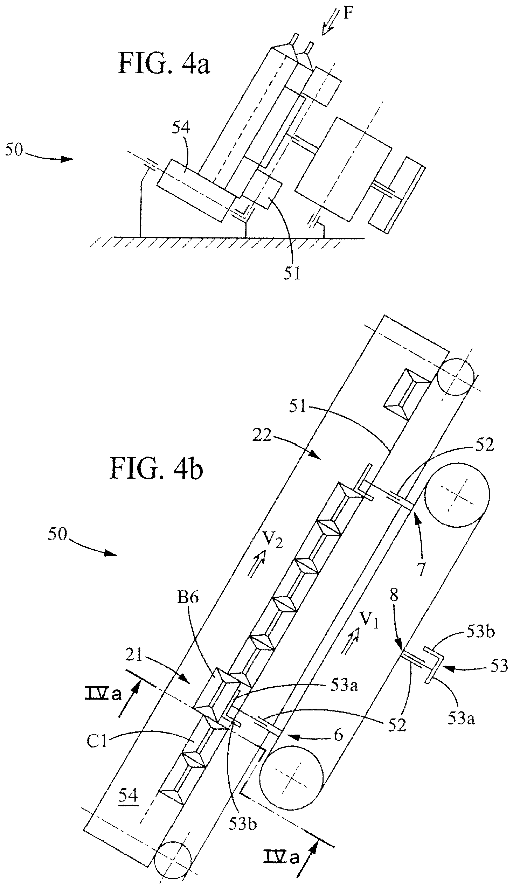

On va à l'aide des figures 4a et 4b décrire un dispositif **50** de formation de lots dans lequel il n'y a pas de guide 11 latéral auxiliaire. Le maintien latéral de l'objet C1 de début de lot suivant pendant que le taquet 6 pousse latéralement l'objet B6 de fin de lot précédent, alors que ces deux objets C1 et B6 sont en pression axiale l'un sur l'autre, se fait en utilisant le poids des objets que l'on incline sur un guide **51** latéral incliné.

Chacun des taquets 6, 7, 8 comprend un corps de vérin **52** commandé par une unité centrale non représentée, et une palette **53** montée sur une tige du vérin 52. La palette 53 comprend une surface **53a** de décalage latéral et une surface **53b** de retenue axiale. La surface 53a de décalage latéral est suffisamment large pour porter l'objet B6 de fin de lot précédent jusqu'à l'arrivée en position transversale de retenue. Ensuite, le taquet 7 en deuxième zone 22 axiale est escamoté comme illustré pour le taquet 8. L'objet B6 est alors entraîné par une bande **54** de convoyage perpendiculaire au guide 51 latéral incliné. La bande 54 de convoyage pousse alors l'objet C1 et tous les objets 20 en amont de cet objet C1 contre la surface 53b de retenue.

Dans une variante du dispositif 50, l'axe du vérin 52 est incliné par rapport à la courroie d'entraînement de façon à revenir en arrière lorsque la palette 53 sort vers la position de retenue. Cela permet d'obtenir, de manière comparable au dispositif 1, un ralentissement axial en première zone 21 axiale et une accélération axiale en deuxième zone 22 axiale.

## Revendications

1. Dispositif (1, 50) de formation de lots à partir d'objets (20) de type briques alimentaires, lesquels objets circulant alignés en une file et sensiblement accolés les uns aux autres, comprenant :

    - un convoyeur (2), conçu pour entraîner les objets (20) par friction le long d'un plan (3a) de convoyage, selon un axe (4) de convoyage,
    - un mécanisme (5) de freinage conçu pour ralentir par rapport au convoyeur au moins un objet (C1), dit objet de début de lot, ledit mécanisme étant conçu pour libérer les objets antérieurs audit objet de début de lot afin que ceux-ci continuent leur déplacement entrainés par le convoyeur;

    le mécanisme de freinage est équipé d'un moyen (25) de décalage transversal conçu pour déplacer, latéralement par rapport à l'axe de convoyage, un objet (B6) immédiatement antérieur à l'objet (C1) de début de lot, en faisant apparaître un épaulement constitué par au moins une portion de la surface frontale de l'objet (C1) suivant pour une prise en charge de l'objet (C1) de début de lot suivant de manière franche et indépendante de la dimension et de la résistance mécanique de cet objet, le mécanisme (5) de freinage est situé d'un côté de la file d'objets (20), équipé d'une pluralité de taquets (6, 7, 8) ; **caractérisé en ce que** le mécanisme (5) de freinage est conçu pour que chacun des taquets soit amené en position transversale de retenue par un mouvement exclusivement parallèle au plan de convoyage.

2. Dispositif selon la revendication 1, dans lequel le mécanisme (5) de freinage est équipé d'un moyen (16-17-18) de déplacement successif de chacun des taquets depuis une première zone (21) axiale jusqu'à une deuxième zone (22) axiale du convoyeur avec une vitesse (V2) de ralenti inférieure à une vitesse (V1) d'entraînement des objets (20) par le convoyeur ; le mécanisme (5) de freinage étant conçu pour déplacer chacun des taquets (6, 7, 8) parallèlement au plan (3a) de convoyage, entre une position transversale de retenue lorsqu'un taquet donné arrive dans la première zone (21) axiale, et une position transversale escamotée lorsque ledit taquet atteint la deuxième zone (22) axiale.

3. Dispositif selon la revendication 2, dans lequel le mécanisme (5) de freinage est conçu de manière que, pour chaque taquet (6, 7, 8), le mouvement de passage en position transversale de retenue se superpose avec un ralentissement axial supplémentaire, à une vitesse inférieure à la vitesse (V2) de ralenti entre les deux zones (21, 22) axiales, et/ou le mouvement transversal vers la position transversale escamotée se superpose avec une accélération axiale pour atteindre une vitesse axiale supérieure à la vitesse (V1) d'entraînement par le convoyeur (2).

4. Dispositif selon l'une des revendications 2 ou 3, dans lequel le mécanisme (5) de freinage comprend un lien (16) en boucle fermée, entraîné par au moins deux roues (17, 18), l'une (17) étant en regard de la première zone (21) axiale et l'autre (18) étant en regard de la deuxième zone (22) axiale ; et dans lequel chacun des taquets est monté à rotation sur un segment (32) principal du lien (16) et comprend un bras (30) de levier et une bielle (34), laquelle bielle (34) est montée à rotation sur un segment (35) auxiliaire du lien (16) et est articulée avec le bras (30) de levier, l'axe d'articulation entre le bras de levier et la bielle et la position relative du segment auxiliaire par rapport au segment principal le long du lien sont déterminés pour imprimer au taquet un ralentissement supplémentaire en première zone axiale et une survitesse en deuxième zone axiale par rapport à la vitesse de ralenti.

5. Dispositif selon l'une des revendications 2 à 4, comprenant un guide (9) latéral principal situé du même côté de la file d'objets (20) que le mécanisme (5) de freinage, chaque taquet (6, 7) faisant saillie du guide (9) latéral principal vers une zone (10) de défilement de la file d'objets (20) lorsque ledit taquet (6, 7) est en position transversale de retenue et est en-deçà du guide (9) latéral principal lorsque le taquet (8) est dans la position transversale escamotée.

6. Dispositif selon la revendication 5, comprenant un guide (11) latéral auxiliaire situé sur un côté de la file d'objets (20), opposé au guide (9) latéral principal, à une distance du guide (9) latéral principal adaptée pour guider la file d'objets (20) en appui les uns sur les autres, ledit guide (11) latéral auxiliaire s'étendant au moins en amont de la première zone (21) axiale.

7. Dispositif selon l'une des revendications 2 à 6, comprenant un espace (14) de dégagement latéral s'étendant au moins dans la première zone (21) axiale de manière à recevoir et à ne pas stopper ledit objet (B6) antérieur à l'objet (C1) de début de lot.

8. Dispositif selon l'une des revendications 2 à 7, dans lequel le mécanisme (5) de freinage est conçu pour que, lorsqu'un taquet (6) arrive axialement dans la première zone (21) axiale, le taquet (7) immédiatement en aval arrive dans la deuxième zone (22) axiale.

9. Dispositif selon l'une des revendications 2 à 8, dans lequel le mécanisme (5) de freinage est conçu de manière que le retrait du taquet (7) situé dans la deuxième zone (22) axiale vers la position transversale escamotée coïncide sensiblement au passage du taquet (6) situé en première zone (21) axiale vers la position transversale de retenue, et/ou dans lequel le mécanisme (5) de freinage est conçu de manière que le retrait du taquet (7) situé dans la deuxième zone (22) axiale vers la position transversale escamotée suit le passage du taquet (6) situé en première zone (21) axiale vers la position transversale de retenue.

10. Dispositif selon l'une des revendications 2 à 9, dans lequel la vitesse (V2) de ralenti est comprise entre 50% et 99% de la vitesse (V1) d'entraînement par le convoyeur (2), de préférence entre 60% et 90%, et notamment entre 65% et 75%.

11. Procédé de formation de lots à partir d'objets (20) de type briques souples contenant du liquide, lesquels objets circulant alignés en une file et sensiblement accolés les uns aux autres, comprenant :

    - une étape d'entraînement le long d'un plan (3a) de convoyage des objets (20) par friction selon un axe (4) de convoyage d'un convoyeur (2),
    - une étape de décalage transversal au cours de laquelle un des objets entrainés est déplacé transversalement par rapport à l'axe (4) de convoyage, ledit objet (B6) constituant ainsi un objet de fin de lot (B6-B1) précédant, ce à l'aide d'un mécanisme (5) de freinage, situé d'un côté de la file d'objets (20) et équipé d'un moyen (25) de décalage transversal conçu pour déplacer, latéralement par rapport à l'axe de convoyage, un objet (B6) immédiatement antérieur à l'objet (C1) de début de lot, en faisant apparaître un épaulement constitué par au moins une portion de la surface frontale de l'objet (C1) suivant pour une prise en charge de l'objet (C1) de début de lot suivant de manière franche et indépendante de la dimension et de la résistance mécanique de cet objet, ledit mécanisme (5) étant équipé d'une pluralité de taquets (6, 7, 8) et conçu pour que chacun des taquets soit amené en position transversale de retenue par un mouvement exclusivement parallèle au plan de convoyage,
    - une étape de freinage d'un objet (C1) immédiatement postérieur à l'objet (B6) déplacé transversalement, constituant ainsi un objet de début du lot (C6-C1) suivant, et
    - une étape de libération des objets (B6-B1) antérieurs à l'objet (C1) de début de lot afin que ceux-ci continuent leur déplacement entrainés par le convoyeur (2).

12. Procédé selon la revendication 11, dans lequel l'étape de déplacement transversal de l'objet (B6) de fin de lot précédant a lieu dans une première zone (21) axiale du convoyeur (2), et l'étape de freinage dudit objet (C1) de début du lot suivant se fait en déplaçant ledit objet (C1) de début de lot suivant à une vitesse (V2) de ralenti inférieure à la vitesse (V1) d'entraînement par le convoyeur (2), à partir de la première zone (21) axiale jusqu'à une deuxième zone (22) axiale du convoyeur (2).

13. Procédé selon la revendication 12, comprenant une étape d'introduction d'un taquet (6) d'appui axial dans la première zone (21) axiale, et en aval de l'objet (C1) de début du lot suivant, l'étape de libération des objets comprend une phase de retrait du taquet (7) d'appui axial pour laisser tous les objets (B6-B1) situés entre la première et la deuxième zones axiales (21, 22) continuer leur déplacement à la vitesse (V2) d'entraînement par le convoyeur (2).

14. Procédé selon la revendication 13, dans lequel l'étape d'introduction du taquet (6) d'appui axial s'accompagne d'un ralentissement axial supplémentaire du taquet (6) d'appui axial, à une vitesse inférieure à la vitesse (V2) de ralenti entre les deux zones (21, 22) axiales, et la phase de retrait du taquet (6) d'appui axial vers la position transversale escamotée se superpose avec une accélération axiale du taquet (6) d'appui axial pour atteindre une vitesse axiale supérieure à la vitesse (V1) d'entraînement par le convoyeur (2).

**Patentansprüche**

1. Vorrichtung (1, 50) zur Bildung von Chargen ausgehend von Gegenständen (20) der Art Nahrungsmittelkartons, wobei die Gegenstände in einer Reihe ausgerichtet und im Wesentlichen aneinander liegend umlaufen, die enthält:

- eine Fördereinrichtung (2), die konzipiert ist, die Gegenstände (20) durch Reibung entlang einer Förderebene (3a) gemäß einer Förderachse (4) (4) anzutreiben,
- einen Bremsmechanismus (5), der konzipiert ist, mindestens einen Gegenstand (C1), Chargenanfangsgegenstand genannt, bezüglich der Fördereinrichtung zu verlangsamen, wobei der Mechanismus konzipiert ist, die Gegenstände vor dem Chargenanfangsgegenstand freizugeben, damit diese ihre Verschiebung angetrieben von der Fördereinrichtung fortsetzen;

wobei der Bremsmechanismus mit einer Einrichtung (25) zur Querverschiebung ausgestattet ist, die konzipiert ist, einen Gegenstand (B6) direkt vor dem Chargenanfangsgegenstand (C1) seitlich bezüglich der Förderachse zu verschieben, indem eine aus mindestens einem Abschnitt der Stirnseite des folgenden Gegenstands (C1) bestehende Schulter zum Vorschein gebracht wird, für eine Übernahme des folgenden Chargenanfangsgegenstands (C1) frei und unabhängig von der Abmessung und vom mechanischen Widerstand dieses Gegenstands, wobei der Bremsmechanismus (5) sich auf einer Seite der Reihe von Gegenständen (20) befindet, ausgestattet mit einer Vielzahl von Mitnehmern (6, 7, 8); **dadurch gekennzeichnet, dass** der Bremsmechanismus (5) so konzipiert ist, dass jeder der Mitnehmer durch eine zur Förderebene ausschließlich parallele Bewegung in eine Rückhalte-Querstellung gebracht wird.

2. Vorrichtung nach Anspruch 1, wobei le Bremsmechanismus (5) mit einer Einrichtung (16-17-18) zur aufeinanderfolgenden Verschiebung jedes der Mitnehmer von einer ersten axialen Zone (21) bis zu einer zweiten axialen Zone (22) der Fördereinrichtung mit einer Verlangsamungsgeschwindigkeit (V2) niedriger als eine Antriebsgeschwindigkeit (V1) der Gegenstände (20) durch die Fördereinrichtung ausgestattet ist; wobei der Bremsmechanismus (5) konzipiert ist, jeden der Mitnehmer (6, 7, 8) parallel zur Förderebene (3a) zwischen einer Rückhalte-Querstellung, wenn ein gegebener Mitnehmer in der ersten axialen Zone (21) ankommt, und einer eingezogenen Querstellung zu verschieben, wenn der Mitnehmer die zweite axiale Zone (22) erreicht.

3. Vorrichtung nach Anspruch 2, wobei der Bremsmechanismus (5) so konzipiert ist, dass für jeden Mitnehmer (6, 7, 8) die Übergangsbewegung in die Rückhalte-Querstellung sich mit einer zusätzlichen axialen Verlangsamung bei einer Geschwindigkeit niedriger als die Verlangsamungsgeschwindigkeit (V2) zwischen den zwei axialen Zonen (21, 22) überlagert, und/oder die Querbewegung in die eingezogene Querstellung sich mit einer axialen Beschleunigung überlagert, um eine axiale Geschwindigkeit höher als die Antriebsgeschwindigkeit (V1) durch die Fördereinrichtung (2) zu erreichen.

4. Vorrichtung nach einem der Ansprüche 2 oder 3, wobei der Bremsmechanismus (5) ein Band (16) in geschlossener Schleife enthält, das von mindestens zwei Rädern (17, 18) angetrieben wird, von denen eines (17) sich gegenüber der ersten axialen Zone (21) und das andere (18) sich gegenüber der zweiten axialen Zone (22) befindet; und wobei jeder der Mitnehmer drehbar auf ein Hauptsegment (32) des Bands (16) montiert ist und einen Hebelarm (30) und eine Schubstange (34) enthält, wobei die Schubstange (34) drehbar auf ein Hilfssegment (35) des Bands (16) montiert und mit dem Hebelarm (30) gelenkig verbunden ist, wobei die Gelenkachse zwischen dem Hebelarm und der Schubstange und die relative Stellung des Hilfssegments bezüglich des Hauptsegments entlang des Bands festgelegt werden, um dem Mitnehmer eine zusätzliche Verlangsamung in der ersten axialen Zone und eine Übergeschwindigkeit in der zweiten axialen Zone bezüglich der Verlangsamungsgeschwindigkeit zu verleihen.

5. Vorrichtung nach einem der Ansprüche 2 bis 4, die eine seitliche Hauptführung (9) enthält, die sich auf der gleichen Seite der Reihe von Gegenständen (20) befindet wie der Bremsmechanismus (5), wobei jeder Mitnehmer (6, 7) von der seitlichen Hauptführung (9) zu einer Vorbeilaufzone (10) der Reihe von Gegenständen (20) vorsteht, wenn der Mitnehmer (6, 7) in der Rückhalte-Querstellung ist, und innerhalb der seitlichen Hauptführung (9) ist, wenn der Mitnehmer (8) in der eingezogenen Querstellung ist.

6. Vorrichtung nach Anspruch 5, die eine seitliche Hilfsführung (11) enthält, die sich auf einer Seite der Reihe von Gegenständen (20) gegenüber der seitlichen Hauptführung (9) in einem Abstand zur seitlichen Hauptführung (9) befindet, die geeignet ist, die Reihe von Gegenständen (20) in Auflage aufeinander zu führen, wobei die seitliche Hilfsführung (11) sich mindestens stromaufwärts vor der ersten axialen Zone (21) erstreckt.

7. Vorrichtung nach einem der Ansprüche 2 bis 6, die einen seitlichen Freiraum (14) enthält, der sich mindestens in der ersten axialen Zone (21) erstreckt, um den Gegenstand (B6) vor dem Chargenanfangsgegenstand (C1) aufzunehmen und nicht zu stoppen.

8. Vorrichtung nach einem der Ansprüche 2 bis 7, wobei der Bremsmechanismus (5) konzipiert ist, damit, wenn ein Mitnehmer (6) axial in der ersten axialen Zone (21) ankommt, der direkt stromabwärts dahinter liegende Mitnehmer (7) in der zweiten axialen Zone (22) ankommt.

9. Vorrichtung nach einem der Ansprüche 2 bis 8, wobei der Bremsmechanismus (5) so konzipiert ist, dass das Zurückziehen des Mitnehmers (7), der sich in der zweiten axialen Zone (22) befindet, in die eingezogene Querstellung im Wesentlichen mit dem Übergang des Mitnehmers (6), der sich in der ersten axialen Zone (21) befindet, in die Rückhalte-Querstellung zusammenfällt, und/oder wobei der Bremsmechanismus (5) so konzipiert ist, dass das Zurückziehen des Mitnehmers (7), der sich in der zweiten axialen Zone (22) befindet, in die eingezogene Querstellung auf den Übergang des Mitnehmers (6), der sich in der ersten axialen Zone (21) befindet, in die Rückhalte-Querstellung folgt.

10. Vorrichtung nach einem der Ansprüche 2 bis 9, wobei die Verlangsamungsgeschwindigkeit (V2) zwischen 50% und 99% der Antriebsgeschwindigkeit (V1) durch die Fördereinrichtung (2), vorzugsweise zwischen 60% und 90%, und insbesondere zwischen 65% und 75% liegt.

11. Verfahren zur Bildung von Chargen ausgehend von Gegenständen (20) von der Art Flüssigkeit enthaltender weicher Kartons, wobei die Gegenstände in einer Reihe ausgerichtet und im Wesentlichen aneinander liegend umlaufen, das enthält:

   - einen Schritt des Antriebs entlang einer Förderebene (3a) der Gegenstände (20) durch Reibung gemäß einer Förderachse (4) einer Fördereinrichtung (2),
   - einen Schritt des Querverschiebens, während dessen einer der angetriebenen Gegenstände bezüglich der Förderachse (4) quer verschoben wird, wobei der Gegenstand (B6) so einen vorhergehenden Chargenendegegenstand (B6-B1) bildet, dies mit Hilfe eines Bremsmechanismus (5), der sich auf einer Seite der Reihe von Gegenständen (20) befindet und mit einer Querverschiebungseinrichtung (25) ausgestattet ist, die konzipiert ist, einen direkt vor dem Chargenanfangsgegenstand (C1) befindlichen Gegenstand (B6) seitlich bezüglich der Förderachse zu verschieben, indem eine aus mindestens einem Abschnitt der Stirnseite des folgenden Gegenstands (C1) bestehende Schulter zum Vorschein gebracht wird, für eine Übernahme des folgenden Chargenanfangsgegenstands (C1) frei und unabhängig von der Abmessung und vom mechanischen Widerstand dieses Gegenstands, wobei der Mechanismus (5) mit einer Vielzahl von Mitnehmern (6, 7, 8) ausgestattet und konzipiert ist, damit jeder der Mitnehmer durch eine zur Förderebene ausschließlich parallele Bewegung in die Rückhaltungs-Querstellung gebracht wird,
   - einen Schritt des Bremsens eines Gegenstands (C1) direkt hinter dem quer verschobenen Gegenstand (B6), der so einen folgenden Chargenanfangsgegenstand (C6-C1) bildet, und
   - einen Schritt der Freigabe der Gegenstände (B6-B1) vor dem Chargenanfangsgegenstand (C1), damit diese von der Fördereinrichtung (2) angetrieben ihre Verschiebung fortsetzen.

12. Verfahren nach Anspruch 11, wobei der Schritt der Querverschiebung des vorhergehenden Chargenendegegenstands (B6) in einer ersten axialen Zone (21) der Fördereinrichtung (2) stattfindet, und der Schritt des Bremsens des folgenden Chargenanfangsgegenstands (C1) erfolgt, indem der folgende Chargenanfangsgegenstand (C1) bei einer Verlangsamungsgeschwindigkeit (V2) verschoben wird, die niedriger ist als die Antriebsgeschwindigkeit (V1) durch die Fördereinrichtung (2), ausgehend von der ersten axialen Zone (21) bis zu einer zweiten axialen Zone (22) der Fördereinrichtung (2).

13. Verfahren nach Anspruch 12, das einen Schritt der Einführung eines Mitnehmers (6) mit axialer Auflage in der ersten axialen Zone (21) und stromabwärts hinter dem folgenden Chargenanfangsgegenstand (C1) enthält, wobei der Schritt der Freigabe der Gegenstände eine Phase des Zurückziehens des Mitnehmers (7) mit axialer Auflage enthält, um alle Gegenstände (B6-B1), die sich zwischen der ersten und der zweiten axialen Zone (21, 22) befinden, ihre Verschiebung bei der Antriebsgeschwindigkeit (V2) durch die Fördereinrichtung (2) fortsetzen zu lassen.

14. Verfahren nach Anspruch 13, wobei der Schritt der Einführung des Mitnehmers (6) mit axialer Auflage von einer zusätzlichen axialen Verlangsamung des Mitnehmers (6) mit axialer Auflage bei einer Geschwindigkeit niedriger als die Verlangsamungsgeschwindigkeit (V2) zwischen den zwei axialen Zonen (21, 22) begleitet wird, und die Phase des Zurückziehens des Mitnehmers (6) mit axialer Auflage in die eingezogene Querstellung sich mit einer axialen Beschleunigung des Mitnehmers (6) mit axialer-Auflage überlagert, um eine axiale Geschwindigkeit zu erreichen, die höher ist als die Antriebsgeschwindigkeit (V1) durch die Fördereinrichtung (2).

**Claims**

1. Device (1, 50) for forming batches from objects (20) of the food brick type, which objects circulate in alignment in a row and substantially adjacent to one another, comprising:

   - a conveyor (2) designed to drive the objects (20) by friction along a conveying plane (3a), along a conveying axis (4),
   - a braking mechanism (5) designed to slow down at least one object (C1), termed batch-starting object, with respect to the conveyor, said mechanism being designed to release the objects preceding said batch-starting object so that they continue their movement driven by the conveyor;

   the braking mechanism is equipped with a transverse shifting means (25) designed to move, laterally with respect to the conveying axis, an object (B6) immediately preceding the batch-starting object (C1), giving rise to a shoulder formed by at least one portion of the front surface of the following object (C1) so that the following batch-starting object (C1) can be taken charge of cleanly and independently of the size and the mechanical strength of this object, the braking mechanism (5) is situated on a side of the row of objects (20) that is equipped with a plurality of dogs (6, 7, 8); **characterized in that** the braking mechanism (5) is designed so that each of the dogs is brought into a transverse retaining position by a movement exclusively parallel to the conveying plane.

2. Device according to Claim 1, in which the braking mechanism (5) is equipped with a means (16-17-18) for successively moving each of the dogs from a first axial zone (21) to a second axial zone (22) of the conveyor with a slowed-down speed (V2) below a speed (V1) of driving the objects (20) by the conveyor; the braking mechanism (5) being designed to move each of the dogs (6, 7, 8) parallel to the conveying plane (3a), between a transverse retaining position when a given dog arrives in the first axial zone (21), and a retracted transverse position when said dog reaches the second axial zone (22).

3. Device according to Claim 2, in which the braking mechanism (5) is designed in such a way that, for each dog (6, 7, 8), the movement for passing into the transverse retaining position is superposed with an additional axial slowing-down to a speed below the slowed-down speed (V2) between the two axial zones (21, 22), and/or the transverse movement towards the retracted transverse position is superposed with an axial acceleration to reach an axial speed above the speed (V1) of driving by the conveyor (2).

4. Device according to either of Claims 2 and 3, in which the braking mechanism (5) comprises a closed-loop link (16) driven by at least two wheels (17, 18), one (17) being opposite the first axial zone (21) and the other (18) being opposite the second axial zone (22); and in which each of the dogs is mounted in rotation on a main segment (32) of the link (16) and comprises a lever arm (30) and a connecting rod (34), which connecting rod (34) is mounted in rotation on an auxiliary segment (35) of the link (16) and is articulated with the lever arm (30), the axis of articulation between the lever arm and the connecting rod and the relative position of the auxiliary segment with respect to the main segment along the link are determined to impart on the dog an additional slowing-down in the first axial zone and an overspeed in the second axial zone with respect to the slowed-down speed.

5. Device according to one of Claims 2 to 4, comprising a main lateral guide (9) situated on the same side of the row of objects (20) as the braking mechanism (5), each dog (6, 7) projecting from the main lateral guide (9) towards a zone (10) of advance of the row of objects (20) when said dog (6, 7) is in the transverse retaining position and is set back from the main lateral guide (9) when the dog (8) is in the retracted transverse position.

6. Device according to Claim 5, comprising an auxiliary lateral guide (11) situated on a side of the row of objects (20), opposite to the main lateral guide (9), at a distance from the main lateral guide (9) that is adapted for guiding the row of objects (20) bearing on one another, said auxiliary lateral guide (11) extending at least upstream of the first axial zone (21).

7. Device according to one of Claims 2 to 6, comprising a lateral clearance space (14) extending at least in the first axial zone (21) so as to receive and to not stop said object (B6) preceding the batch-starting object (C1).

8. Device according to one of Claims 2 to 7, in which the braking mechanism (5) is designed so that, when a dog (6) arrives axially in the first axis zone (21), the dog (7) immediately downstream arrives in the second axial zone (22).

9. Device according to one of Claims 2 to 8, in which the braking mechanism (5) is designed in such a way that the withdrawal of the dog (7) situated in the second axial zone (22) towards the retracted transverse position coincides substantially with the passage of the dog (6) situated in the first axial zone (21) towards the transverse retaining position, and/or in which the braking mechanism (5) is designed in such a way that the withdrawal of the dog (7) situated in the second axial zone (22) towards the retracted transverse position follows the passage of the dog (6) situated in the first axial zone (21) towards the transverse retaining position.

10. Device according to one of Claims 2 to 9, in which the slowed-down speed (V2) is between 50% and 99% of the speed (V1) of driving by the conveyor (2), preferably between 60% and 90%, and in particular between 65% and 75%.

11. Method for forming batches from objects (20) of the flexible brick type containing liquid, which objects circulate in alignment in a row and substantially adjacent to one another, comprising

- a step of driving objects (20) by friction along a conveying plane (3a), along a conveying axis (4) of a conveyor (2),
- a transverse shifting step during which one of the driven objects is moved transversely with respect to the conveying axis (4), said object (B6) thus constituting an end object of the preceding batch (B6-B1), this being achieved with the aid of a braking mechanism (5) situated on one side of the row of objects (20) and equipped with a transverse shifting means (25) designed to move, laterally with respect to the conveying axis, an object (B6) immediately preceding the batch-starting object (C1), giving rise to a shoulder formed by at least one portion of the front surface of the following object (C1) so that the following batch-starting object (C1) can be taken charge of cleanly and independently of the size and the mechanical strength of this object, said mechanism (5) being equipped with a plurality of dogs (6, 7, 8) and designed so that each of the dogs is brought into a transverse retaining position by a movement exclusively parallel to the conveying plane,
- a step of braking an object (C1) immediately posterior to the transversely moved object (B6), thus constituting a starting object of the following batch (C6-C1), and
- a step of releasing the objects (B6-B1) preceding the batch-starting object (C1) so that they continue their movement driven by the conveyor (2).

12. Method according to Claim 11, in which the step of transversely moving the preceding batch end object (B6) takes place in a first axial zone (21) of the conveyor (2), and the step of braking said starting object (C1) of the following batch takes place by moving said following batch-starting object (C1) at a slowed-down speed (V2) below the speed (V1) of driving by the conveyor (2), from the first axial zone (21) to a second axial zone (22) of the conveyor (2).

13. Method according to Claim 12, comprising a step of introducing an axial bearing dog (6) into the first axial zone (21), and downstream of the starting object (C1) of the following batch, the step of releasing the objects comprises a phase of withdrawing the axial bearing dog (7) in order to allow all the objects (B6-B1) situated between the first and the second axial zones (21, 22) to continue their movement at the speed (V2) of driving by the conveyor (2).

14. Method according to Claim 13, in which the step of introducing the axial bearing dog (6) is accompanied by an additional axial slowing-down of the axial bearing dog (6) to a speed below the slowed-down speed (V2) between the two axial zones (21, 22), and the phase of withdrawing the axial bearing dog (6) towards the retracted transverse position is superposed with an axial acceleration of the axial bearing dog (6) in order to reach an axial speed above the speed (V1) of driving by the conveyor (2).

FIG. 1

FIG. 2

EP 2 804 825 B1

42

40

B'6

42'

40'

B6

41

31'   41'   31   6

6'   32   33   30

α2   α1   34   35

35a

36, 36a

17

16

**FIG. 3**

16

FIG. 4a

FIG. 4b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009019382 A
- EP 1918226 A
- FR 2225363
- DE 19528356
- US 4551964 A
- EP 0685392 A